Europäisches Patentamt

European Patent Office

Office européen des brevets

(11) Numéro de publication: **0 498 134 A1**

## DEMANDE DE BREVET EUROPEEN

(21) Numéro de dépôt: **91480019.8**

(22) Date de dépôt: **04.02.91**

(51) Int. Cl.5: **G09F 13/18**

(43) Date de publication de la demande:
**12.08.92 Bulletin 92/33**

(84) Etats contractants désignés:
**DE ES IT**

(71) Demandeur: **Noerdinger, Claude**

Avenue Lamartine, Le Grand Duc
F-6210 Mandelieu(FR)

(72) Inventeur: **Noerdinger, Claude**
Avenue Lamartine, Le Grand Duc
F-6210 Mandelieu(FR)

(54) **Dispositif réflecteur pour affichage lumineux sur le fond opaque d'une plaque transparente.**

(57) L'invention concerne un dispositif permettant de réflectoriser la lumière issue d'un des côtés ou de la cavité d'une plaque transparente à fond opaque, sans obturer les tranches des autres côtés.

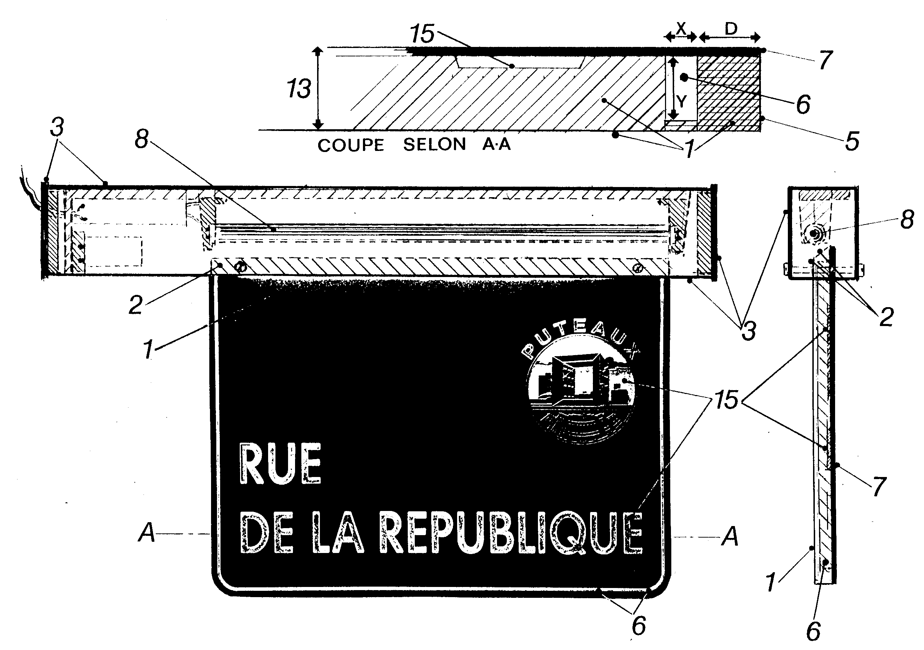

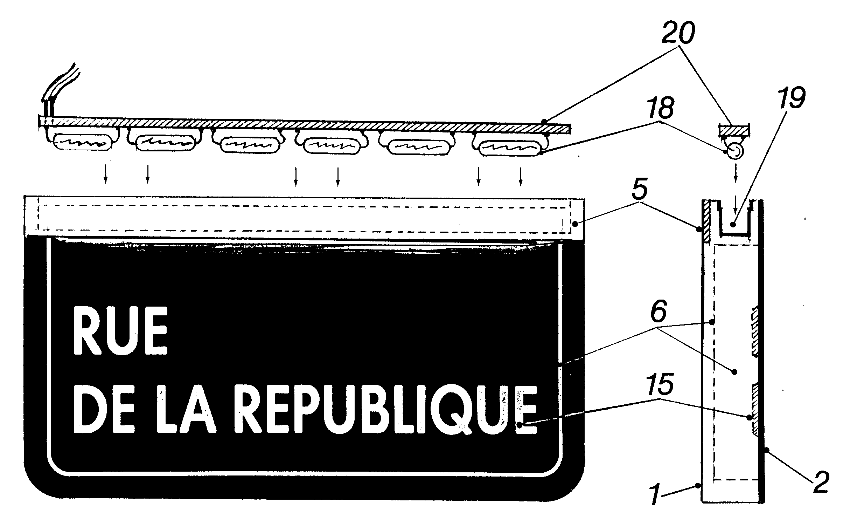

Il est constitué, selon la planche 1/3, d'une plaque transparente (1) à fond opaque (7) recevant des inscriptions (15), munie à une distance (D) des bords latéraux, d'un filet réflecteur (6) d'une profondeur (Y) inférieure de 1 à 2 m/m à l'épaisseur (13) de la plaque, cernant ainsi la surface réservée aux inscriptions (15) pour leur réflectoriser la totalité de la lumière, issue d'une source lumineuse (8) située sur l'axe de l'arête (2) prise dans le cache (3).

Le dispositif selon l'invention, est particulièrement destiné à l'affichage lumineux, notamment pour les plaques de rues, les plaques minéralogiques, les signalisations diverses.

COUPE SELON A·A

RUE
DE LA REPUBLIQUE

L'éclairement de ce type de plaque transparente, avec ou sans fond opaque, est traditionnellement effectué par l'un des côtés de la plaque. Les tranches opposées et perpendiculaires sont soit obturées par des profilés, bandes adhésives, ou autres accessoires destinés à récupérer plus ou moins la lumière, soit laissées libres et polies laissant alors échapper une grande partie de l'éclairement de la plaque, surtout lorsque la source lumineuse est éloignée des bords. L'exemple le plus connu se rapporte aux plaques de signalisation, notamment celle des rues, ou la gravure en creux par l'envers des lettres constituant les appellations ou noms des rues, vues à travers la surface transparente de la face non peinte, sont éclairées de manière intense au début du texte, puis de plus en plus faiblement à mesure que ces lettres sont de plus en plus éloignées de la source de lumière.

La conception onéreuse et l'absence d'efficacité de ce type de plaques le plus souvent réalisées en polymétacrylate de méthyle coulé de marque "ALTUGLAS"® "PLEXIGLAS"® ou "PERSPEX"® selon qu'il s'agisse de fabricants français, allemand, ou hollandais, en matière de plaques de rues éclairantes, n'intéresse qu'assez peu le marché des collectivités publiques du fait de leur mauvais rendement lumineux et de leur peu d'efficacité par rapport à leur prix, leur préférant les plaques de rues traditionnelles, de 4 à 8 fois moins couteuses. Il convenait donc de régler ces problèmes importants :

1) réflectoriser la lumière sur toutes les inscriptions de manière uniforme.

2) laisser percevoir le relief par transparence, du 1er au dernier signe, dans les 3 dimensions.

3) laisser libres les tranches polies en leur gardant un faible éclairement et respecter totalement la structure transparente du matériau.

4) supprimer l'adjonction par vissage ou collage de matériaux hétérogènes sur l'ensemble des tranches polies, éliminant ainsi le coût de ces matériaux, de leur mise en oeuvre, de leur entretien et leur pérennité problématique.

5) délimiter par un filet esthétique la ou les surfaces éclairées par la ou les sources lumineuses.

En dehors des avantages mentionnés ci-dessus, on peut en outre remarquer :

- la diversité des sources lumineuses pouvant être employées avec le dispositif
- leur faible consommation et leur rendement élevé.
- l'économie ainsi réalisée
- la simplicité du dispositif.

L'invention a pour objectifs d'apporter les solutions au cahier des charges ainsi constitué du 1er au 5ème point décrit plus haut.

L'invention concerne donc un dispositif réflectorisant pour affichage lumineux sur le fond opaque d'une plaque transparente, pour l'information, la signalisation publicitaire ou indicative, intérieure, ou extérieure.

Elle comporte selon une première caractéristique de l'invention illustrée par la planche 1/3 une plaque transparente (1) en polymétacrylate de méthyle coulé, ou en polycarbonate à surface brillante ou antireflet, possédant un indice de réfraction supérieur à celui du verre, laquelle plaque est opacifiée sur sa face arrière (7), au moyen d'une peinture acrylique ou tout autre matière, usinable après séchage, et adhérant parfaitement à cette face. On usine, à distance (D) des 3 bords latéraux, un filet (6) constitué par une gorge de quelques millimètres de section (X), et d'une profondeur (Y) inférieure de 1 à 2 m/m à l'épaisseur de la plaque, ce filet sera rempli d'une teinte claire opaque adhérente, destinée ainsi à réflectoriser la lumière, sur la surface ainsi délimitée et réservée aux inscriptions (15). Ces inscriptions , signes ou graphismes (15), seront au préalable ou ensuite, imprimées, collées, gravées ou incluses à l'envers, au travers de la couche opacifiée (7) pour être vues en relief, ou non, par transparence et à l'endroit. Le 4 ème bord latéral (2) sera enfermé sur 2 cms dans un profilé à âme creuse (3), fermé aux 2 bouts, et recevra au dessus et dans l'axe de l'angle de 105 à 120° formé par le bord et la tranche biseautée, opposé à la face opaque, la source lumineuse (8) composée d'un tube lumineux linéaire ou fractionné, et de ses accessoires .

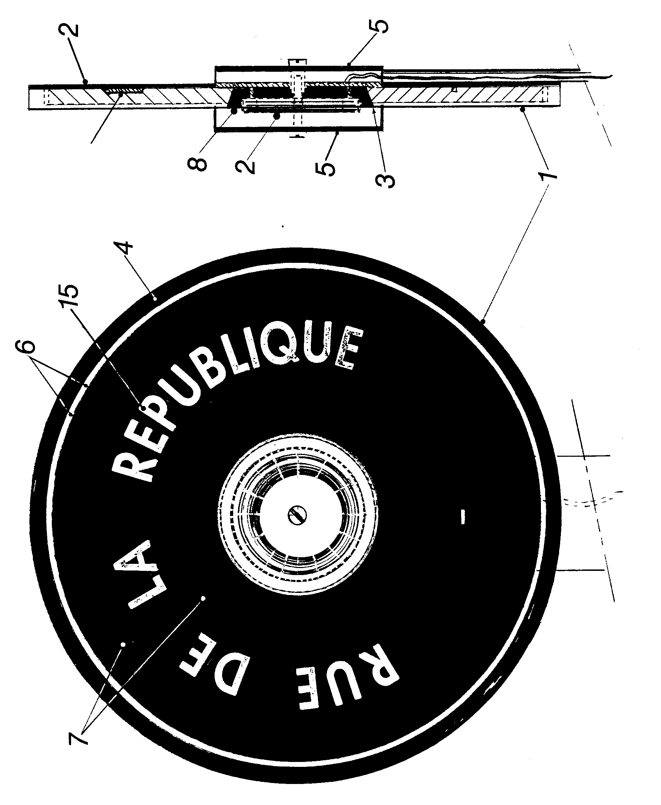

Selon une deuxième caractéristique de l'invention, illustrée par la planche 2/2, l'éclairement issu d'une source lumineuse (2) située au centre de la plaque et constitué ici d'un tube circulaire placé à 4 ou 5 m/m de l'angle de 105 à 120° formé (3) par la tranche de l'évidement circulaire usiné en biseau de 105 à 120°,et la partie externe opposée au fond recouverte par le capot (5), abritant la source lumineuse (2) et ses accessoires de branchement. Le filet réflecteur circulaire (6) usiné de la même manière que dans la première caractéristique cernera la surface réservée aux inscriptions (15).

Selon une troisième caractéristique de l'invention, une gorge (19) de 8 m/m de large et 12 m/m de profondeur, est usinée dans un des 4 bords latéraux. Y sera glissé un petit circuit électrique imprimé (20) constitué de micro lampes (18) soudées entre elles en parallèle, masquées à la vue, du côté transparent, par une plaquette (5) rapportée et collée de 15 m/m de hauteur dans un matériau homogène opaque de préférence, et dans le même matériau que la plaque transparente. Tout au long de cette gorge, les mêmes lampes (18) éclaireront la plaque à fond opaque, qui devra être munie du filet réflecteur toujours usiné de la même manière que selon la 1ère caractéristique, à une distance (D) des trois autres bords latéraux, afin de cerner la surface réservée aux inscriptions (15), pour leur garder le maximum de lumière. Cette solution sera plus particulièrement utilisée dans la fabrication de plaques éclairantes à faible voltage ne nécessitant pas d'accessoires de branchement tel que starter, ou transformateur de tension, avec sortie directe des fils de branchement. Les dessins, les inscriptions ou éléments graphiques (15) disposés du côté du fond opaque (2) de la plaque (1) pour être vus par transparence, seront de préférence gravés (à l'envers et en creux).

Comme on pourra l'observer dans les 3 caractéristiques précédentes, le dispositif objet de l'invention constitué par le filet réflecteur (6) peut être appliqué à d'autres types de réalisations, sur tous types de plaques transparentes à fond opaque, dans des matériaux équivalents, avec adjonction d'éléments qui seraient alors sans relation avec un quelconque apport inventif.

Par ces exemples de réalisations, l'invention est particulièrement indiquée dans la fabrication de plaques de rue, d'enseignes de tous types, de plaques minéralogiques de tous véhicules.

## Revendications

1. Dispositif réflectorisant pour affichage lumineux sur le fond opaque d'une plaque transparente, pour la signalisation, l'information publicitaire ou indicative, caractérisé en ce qu'il est composé d'une plaque transparente (1) à fond opaque (7) dont selon la revendication 1 de l'invention, l'un des bords latéraux (2) est inséré dans un profilé à âme creuse fermé aux deux bouts (3) dans lequel est disposé au dessus et sur l'axe de l'arête opposée au fond opaque de la plaque transparente, une source lumineuse linéaire ou fractionnée (8) dont la lumière incidente pénétre dans un angle de 105 à 120° (2) formé par le bord et la tranche. Cette source lumineuse contenue dans le cache (3) est réflectorisée au moyen d'un filet (6) gravé en creux sur la même face (7), recevant le fond opaque (7) à une profondeur (Y) inférieure de 1 à 2 m/m à l'épaisseur de la plaque (13) à une distance (D) des côtés ne recevant qu'une fraction de la source lumineuse (8). Le filet réflecteur ainsi constitué, et toujours de teinte claire, délimite le périmètre de la surface destinée à recevoir les inscriptions (15).

2. Dispositif réflectorisant selon toutes les revendications caractérisé en ce que le filet réflecteur (6) est d'une section (X) de 1 à plusieurs m/m, qu'il est constitué d'une simple gorge usinée ou incluse à partir du fond opaque (7) à une profondeur ne débouchant jamais sur la face transparente (Y) avec une garde de 1 à 2 m/m par rapport à cette face, qu'il est toujours rempli d'un produit adhérent de teinte claire et que la faible lumière passant entre la face transparente et le filet, continue d'éclairer les tranches(5).

3. Dispositif réflectorisant selon toutes les revendications caractérisé en ce que le filet réflecteur (6) est toujours situé à une distance (D) des bords de la plaque (1) et qu'il peut épouser des formes linéaires diverses de plaques de formes diverses, n'ayant pour objet que de réflectoriser la lumière sur la surface réservée aux inscriptions, qu'après le filet réflecteur l'espace (D) compris entre le filet et les bords latéraux peut être entièrement transparent.

4. Dispositif réflectorisant selon la revendication 1, 2 et 3 de l'invention caractérisé en ce que la plaque transparente (1) à fond opaque (2) peut être évidée au centre (8) et éclairée par la source lumineuse (2) constituée par une lampe circulaire dont l'axe est situé sur l'arête (3) d'un angle de 105 à 120° formé par les bords transparents évidés, et la face comprise dans le capot (5). La lumière incidente est réflectorisée par le filet (6) faisant ici le tour de la plaque à quelques m/m du contour extérieur (4) et cernant la surface (7) réservée aux inscriptions (15).

5. Dispositif réflectorisant selon toutes les revendications caractérisé ce que la source lumineuse peut être disposée à un quelconque endroit évidé de la surface réservée aux inscriptions, délimitée par le filet réflecteur et qu'il suffit que cette source lumineuse soit disposée dans un cache ou capot étanche visé contre la surface transparente, et que dans ce cas le filet (6) sera usiné en continu.

6. Dispositif réflectorisant selon la revendication 1 et 2 caractérisé en ce que la source lumineuse est composée d'un tube lumineux dont l'axe d'éclairement est situé dans l'axe de l'arête biseautée formant un angle de 105 à 120°.

7. Dispositif réflectorisant selon la revendication 1, 2, 4 et 5 caractérisé en ce que la source lumineuse peut être insérée dans un des bords latéraux de la plaque transparente (1) à fond opaque (2) au moyen de petites lampes (18) soudées sur un circuit électrique imprimé (20)-,le tout serti dans une gorge transparente elle même (19) usinée sur ce bord. Une plaquette opaque de teinte claire (5) est contrecollée pour masquer la gorge et les lampes, le filet réflecteur (6) cerne sur les 3 autres bords latéraux la surface réservée aux inscriptions (15).

8. Dispositif réflectorisant selon toutes les revendications caractérisé en ce que le matériau de la plaque (1) est parfaitement transparent et possède un indice de réfraction supérieur à 1,2, et que son épaisseur peut varier de 2 à 100 mm.

9. Dispositif réflectorisant selon toutes les revendications caractérisé en ce que les chants libres autour de la plaque (1) restent parfaitement transparents et faiblement éclairés.

10. Dispositif réflectorisant selon toutes les revendications caractérisé en ce que les inscriptions (15) sont, soit gravées en creux ou en relief, soit imprimées, soit serties dans la plaque transparente (1), quelles sont de teinte contrastée par rapport au fond, d'une profondeur toujours inférieure à celle du filet réflecteur (6), et vues par transparence car disposées sur le fond contrasté par rapport aux inscriptions.

11. Dispositif réflectorisant selon toutes les revendications caractérisé en ce que le fond opaque (7) de la plaque transparente (1) recevant les inscriptions (15) peut être soit de couleur claire et les inscriptions foncées, soit de couleur foncée et les inscriptions claires, que ces inscriptions, symboles ou graphismes seront de préférence gravées en creux à l'envers du côté du fond opaque pour être vues en relief à l'endroit par transparence.

COUPE SELON A-A

Office européen
des brevets

# RAPPORT DE RECHERCHE EUROPEENNE

Numero de la demande

EP   91 48 0019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 780 463  (L. ARONOFF)<br>* Colonne 6, lignes 27-44; figure 4 *<br>--- | 1 | G 09 F   13/18 |
| A | GB-A-2 149 657  (B. ROMIEU)<br>* Page 1, ligne 74 - page 2, ligne 2; figures 1-7 *<br>--- | 1 | |
| E | FR-A-2 651 597  (C. NOERDINGER)<br>* En entier *<br>----- | 1-11 | |

DOMAINES TECHNIQUES
RECHERCHES (Int. Cl.5)

G 09 F
F 21 S
F 21 V

Le présent rapport a été établi pour toutes les revendications

| Lieu de la recherche | Date d'achèvement de la recherche | Examinateur |
|---|---|---|
| LA HAYE | 16-09-1991 | GALLO G.G. |

EPO FORM 1503 03.82 (P0402)